# EUROPÄISCHE PATENTSCHRIFT

(11) **EP 2 032 724 B1**
(45) Veröffentlichungstag und Bekanntmachung des Hinweises auf die Patenterteilung: **31.07.2013**
(21) Anmeldenummer: 07729836.2
(22) Anmeldetag: 04.06.2007
(51) Int. Cl.: C22B 4/00, H05H 1/42

(54) **VERFAHREN UND VORRICHTUNG ZUM EINBRINGEN VON STÄUBEN IN EINE METALLSCHMELZE EINER PYROMETALLURGISCHEN ANLAGE**
METHOD AND DEVICE FOR INTRODUCING DUST INTO A MOLTEN BOTH OF A PYROMETALLURGICAL INSTALLATION
PROCÉDÉ ET DISPOSITIF POUR INTRODUIRE DES POUSSIÈRES DANS UN BAIN DE FUSION D'INSTALLATION PYROMÉTALLURGIQUE

(30) Priorität: 28.06.2006 DE 102006029725
(43) Veröffentlichungstag der Anmeldung: 11.03.2009
(73) Patentinhaber: Siemens Aktiengesellschaft, 80333 München (DE)
(72) Erfinder: MATSCHULLAT, Thomas, 90542 Eckental (DE); HARTMANN, Werner, 91085 Weisendorf (DE); LINS, Günter, 91056 Erlangen (DE)
(86) Internationale Anmeldenummer: PCT/EP2007/055448
(87) Internationale Veröffentlichungsnummer: WO 2008/000586

(56) Entgegenhaltungen:
- EP-A- 0 465 422
- GB-A- 2 014 615
- US-A- 4 853 250
- US-A1- 2005 183 542

## Beschreibung

Die Erfindung betrifft ein Verfahren und eine Vorrichtung zum Einblasen von Stäuben in eine Metallschmelze einer pyrometallurgischen Anlage. Bei den Stäuben handelt es sich vor allem um in der Hüttenindustrie, etwa bei der Stahlherstellung anfallende Stäube mit metallischen und sonstigen, z.B. oxidischen Bestandteilen. Diese Stäube werden zum Teil in Deponien gelagert, vielfach aber auch bei der Metallherstellung verwendet. Dazu ist es bei verschiedenen Verfahren bekannt, die Stäube in brikettierter Form zu verwenden. Bei einem Verfahren von Thyssen Krupp (Oxycup-Verfahren) werden Stäube zu zementähnlichen Steinen verarbeitet, welche in einen Schachtofen eingesetzt werden. Daneben werden Stäube auch eingeblasen, beispielsweise bei der Stahlschrottverschmelzung in Lichtbogenöfen. Dies führt aber meist zu einer Verschlechterung des Prozesses, insbesondere zu Instabilitäten des Lichtbogens. Ganz allgemein hat der Staub auf die Schlacke eine abkühlende Wirkung, wodurch die notwendige Schäumung der Schlacke verringert oder ganz unterdrückt wird. Stäube lassen sich daher oft nur in limitierter Menge zuführen. DE 2900 864 offenbart ein Verfahren zum Einspritzen von pulverförmigen Material in eine metallurgische Schmelze mit Hilfe eines Trägergases zugeführt wird. Davon ausgehend ist es die Aufgabe der Erfindung, ein Verfahren und eine Vorrichtung zum Einbringen von Stäuben in eine Metallschmelze einer pyrometallurgischen Anlage vorzuschlagen, die hinsichtlich der geschilderten Probleme Abhilfe schaffen.

Diese Aufgabe wird durch ein Verfahren nach Anspruch 1 und eine Vorrichtung nach Anspruch 7 gelöst. Bei den erfindungsgemäßen Verfahren wird ein Staubpartikel enthaltendes Trägergas durch das in der Heizzone eines elektrodenlosen, induktiv gekoppelten Plasmabrenners erzeugte Plasma geleitet, bevor es anschließend in einen die Metallschmelze enthaltenden Bereich einer Anlage eingeblasen wird. Im Plasma wird das Trägergas seinerseits in den Plasmazustand überführt. Durch Wechselwirkung mit dem sie umgebenden Plasma werden die mit dem Trägergas eingebrachten Staubpartikel auf eine Temperatur erhitzt, die größer oder gleich der Temperatur der Metallschmelze oder Schlacke ist. Aufgrund des Fehlens von Elektroden für die Erzeugung des Plasmas werden lange Standzeiten erreicht, da weder ein Elektrodenabbrand noch eine mechanische Beeinträchtigung der Elektroden durch den Plasmabrenner durchströmende Staubpartikel gegeben sind. Vorteilhaft ist weiterhin, dass reaktive Gase wie Sauerstoff eingeblasen werden können, ohne dass die Gefahr der chemischen Beeinträchtigung von Elektroden besteht. Vorteilhaft ist auch, dass durch die ausschließlich induktive Beheizung des Plasmas der schmelzmetallurgische Bereich einer Anlage und die Plasmaflamme elektrisch voneinander entkoppelt sind, so dass eine erheblich bessere Steuerung der einzelnen Verfahrensschritte erzielt werden kann. Da das Prozessgas und die darin enthaltenen Staubpartikel praktisch auf die Prozesstemperatur aufgeheizt werden, ist eine Schlackenabkühlung vermieden. Im Gegensatz zu Lichtbogenverfahren ist außerdem das Auftreten von Lichtbogen-Instabilitäten verhindert.

Das Plasma wird bei einer bevorzugten Verfahrensvariante so geregelt, dass die Staubpartikel in den flüssigen oder gasförmigen Zustand übergehen. Dadurch ist eine sehr homogene Vermischung mit der Metallschmelze gewährleistet. Durch die Verflüssigung oder Verdampfung oxidischer Staubpartikel lashohen Temperaturen mit einer guten Reaktionskinetik gerechnet werden kann. So lassen sich beispielsweise zum Zwecke eines erhöhten Ausbringens von Chrom aus Gründen des Umweltschutzes chromhaltige Stäube bzw. Cr-VI und Cr₂0₃ reduzieren. Die Reduktion von Stäuben ist auch bei der Edelstahlherstellung von Vorteil. Ein weiteres Anwendungsbeispiel ist die Reduktion von Al- Zn-Krätzen, das sind Al- und Zn-Oxide, die bei der jeweiligen Herstellung anfallen.

Vorzugsweise wird das staubhaltige Trägergas durch die Heizzone des Plasmabrenners umgebende Lastspule axial hindurchgeleitet. Bei einer besonders bevorzugten Verfahrensvariante wird der Heizzone über ein koaxiales Injektionsrohr ein mit Staubpartikeln beladenes Trägergas und über ein das Injektionsrohr koaxial umfassendes Gasführungsrohr ein zur Plasmaerzeugung benötigtes staubfreies Gas zugeführt. Dadurch lassen sich die Gas- und Partikelströme separat steuern und auf diese Weise ein stabiles Plasma erzeugen.

Bei einer weiteren bevorzugten Verfahrensvariante wird das Trägergas durch eine der Heizzone vorgeschaltete, von einer Vorheizspule schwächerer Leistung gebildete Vorheizzone geleitet. In der Vorheizzone wird das Trägergas vorionisiert und die darin transportierten Staubpartikel werden soweit vorgeheizt, dass eine zu starke Abkühlung oder ein Erlöschen des Plasmas in der Heizzone der Lastspule vermieden wird. Auf diese Weise wird gewährleistet, dass Impedanzschwankungen der plasmagefüllten Lastspule gering bleiben und ein an dieser betriebener Hochleistungs-Hochfrequenzgenerator immer in einem günstigen Leistungsbereich betrieben werden kann. Ohne Vorheizzone besteht die Gefahr, dass in der Heizzone ein zu gering ionisiertes Plasma vorhanden ist oder dass das vorhanherrscht, was zu instabilem Verhalten des Hochfrequenz-Kreises bis zu dessen Beschädigung führen kann. Der erwähnte Hochfrequenz-Generator kann somit für den optimalen Bereich bei maximalem Wirkungsgrad ausgelegt werden. Der ungünstige Betriebsbereich, der für eine Plasmazündung notwendig ist, wird dadurch vermieden.

Eine zur Durchführung des beschriebenen, insbesondere für die Stahlherstellung und Stahlverarbeitung vorteilhaft anwendbaren Verfahrens geeignete Vorrichtung umfasst einen elektrodenlosen Plasmabrenner mit einem im Wesentlichen rohrförmigen, zum Hindurchleiten eines Staubpartikel enthaltenden Trägergases dienenden Gehäuse, das von einer eine Heizzone bildenden induktiven Lastspule koaxial umgriffen ist. Wie bereits oben erwähnt, sind Elektroden zur Erzeugung eines Lichtbogens nicht erforderlich, so dass die Vorrichtung entsprechend einfach ausgestaltet ist und einen geringen Wartungsaufwand erfordert.

Vorzugsweise ist ein einseitig koaxial in das Gehäuse hinein ragendes Injektionsrohr vorhanden. Über dieses lässt sich ein Staubpartikel enthaltendes Trägergas der Heizzone des Plasmabrenners zuführen, wobei sich das Zuführrohr zweckmäßigerweise etwa bis zur Heizzone erstreckt. Das Injektionsrohr ist von einem Gasführungsrohr koaxial umfasst, wobei zwischen Injektionsrohr und Hüllrohr bzw. Gehäuse jeweils ein hohlzylindrischer Ringkanal vorhanden ist. Durch den an das Injektionsrohr angrenzenden Ringkanal wird das im Folgenden als Plasmagas bezeichnete Gas geleitet, das zur Plasmaerzeugung in der Heizzone der Lastspule benötigt wird. Der radial außen liegende Ringkanal wird mit einem im Folgenden Mantelgas genannten Gas beschickt, das der Kühlung des Gehäuses dient und Die bereits weiter oben beschriebene Vorheizzone wird vorzugsweise von einer das Zuführrohr koaxial umfassenden Vorheizspule gebildet.

Die Erfindung wird nun unter Bezugnahme auf die beigefügten schematischen Darstellungen näher erläutert. Es zeigen:
- FIG 1: ein erstes Ausführungsbeispiel einer Vorrichtung, die lediglich eine Heizzone aufweist und
- FIG 2: eine Vorrichtung in einer in FIG 1 entsprechenden Darstellung, welche eine zusätzliche Heizzone, nämlich eine Vorheizzone aufweist.

Die in den Abbildungen ausschnittweise gezeigten Vorrichtungen umfassen einen elektrodenlosen Plasmabrenner 5 mit einem im wesentlichen als Rohrabschnitt ausgebildeten, aus einem keramischen Material, beispielsweise Silizium-Nitrid, bestehenden Gehäuse 1. Dieses weist eine Eingangsöffnung 2 und eine Ausgangsöffnung 3 auf. Nahe der Ausgangsöffnung 3 ist das Gehäuse 1 koaxial von einer Lastspule 4 umgriffen, welche zur Erzeugung eines magnetischen Wechselfeldes mit einem Hochleistungs-Hochfrequenz-Generator (nicht gezeigt) verbunden ist. Die Lastspule bildet eine Heizzone 6, in der ein Staubpartikel enthaltendes Trägergas sowie das durch den Ringkanal zwischen Injektionsrohr 7 und Gasführungsrohr 8 einströmende Plasmagas und ferner das zwischen Gasführungsrohr 8 und Gehäuse 1 strömende Mantelgas in den Plasmazustand überführt werden. Dabei werden Temperaturen erreicht, die mindestens jenen eines Lichtbogens herkömmlicher Plasmabrenner entsprechen. Die elektrische Leistungszufuhr wird über einen Hochleistungs-Hochfrequenzgenerator mit einer Dauerleistung von im Bereich von typischerweise 10 kW bis 50 MW und einer selfeld der Lastspule 4 wird in der Heizzone 6 ein elektrisches Feld mit einer so hohen Feldstärke induziert, dass es zum Gasdurchbruch mit nachfolgender Ionisation des Trägergases, des Plasmagases sowie des Mantelgases kommt. Sobald die Heizzone 6 mit einem Plasma ausreichend hoher Leitfähigkeit gefüllt ist, induziert das hochfrequente elektrische Wechselfeld im Plasma einen hochfrequenten Strom, der zu einer intensiven Heizung des Plasmas führt. Dabei können elektrische Wirkungsgrade über 50% für die Plasmaheizung erzielt werden, bei Leistungen bis zu einigen 100 kW. Das Plasma in der Heizzone 6 kann, je nach der zugeführten elektrischen Leistung, Temperaturen erreichen, die ein Aufschmelzen von hochschmelzenden Materialien, wie Metalloxiden und Nitriten ermöglicht.

Eingangsseitig ragt in das Gehäuse 1 ein sich bis zur Heizzone 6 erstreckendes und in diese ausmündendes Injektionsrohr 7 zentral hinein. Dieses hat einen wesentlich kleineren Durchmesser bzw. Strömungsquerschnitt als das Gehäuse 1. Über das Injektionsrohr 7 wird ein Staubpartikel enthaltendes Trägergas einem zentralen Bereich der Heizzone 6 zugeführt. Das Injektionsrohr 7 ist koaxial und mit Radialabstand von einem Gasführungsrohr 8 umfasst, wobei zwischen dem Injektionsrohr 7 und dem Gasführungsrohr 8 ein Ringkanal 9 frei bleibt. Durch diesen wird ein der Plasmaerzeugung dienendes staubfreies Gas (Plasmagas) geleitet. Der Durchmesser des Gasführüngsrohr 8 ist so bemessen, dass auch zwischen ihm und dem Gehäuse 1 ein Ringkanal 10 frei bleibt. Dieser dient zur Zuführung eines Kühlgases, beispielsweise Luft, um das keramische Gehäuse 1 vor einer zu starken thermischen Beeinflussung zu schützen.

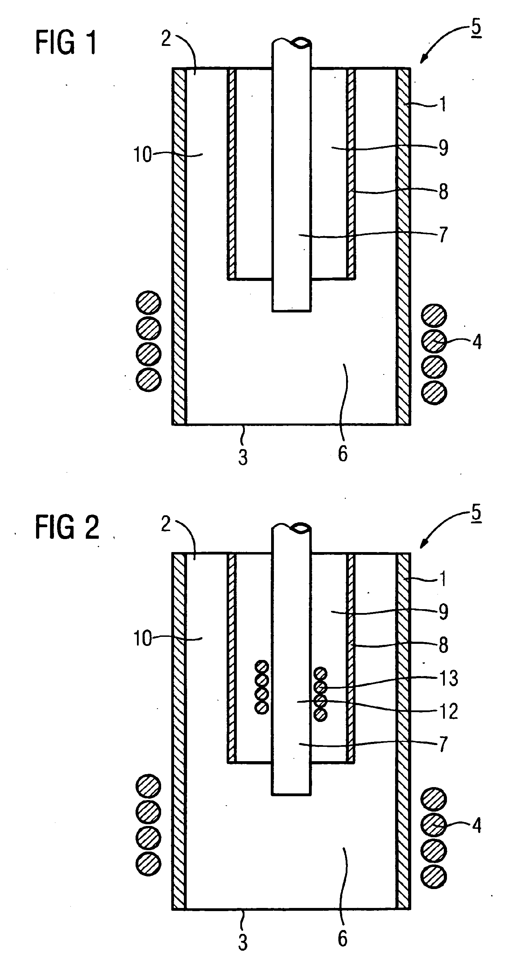

Die in FIG 2 schematisch dargestellte Vorrichtung unterscheiwird durch eine Vorheizspule 13 gebildet, welche das Injektionsrohr 7 in einem innerhalb des Gasführungsrohr 8 angeordneten Bereich koaxial umfasst. Die Vorheizspule weist eine wesentlich geringere Leistung auf, als die Lastspule 4. Sie erzeugt dementsprechend ein Plasma mit einer geringeren Ionendichte, das jedoch, wenn es dem Zentralbereich der Heizzone 6 zugeführt ist, größere Impedanzschwankungen der Lastspule 4 verhindert, wie weiter oben schon erläutert wurde.

## Patentansprüche

1. Verfahren zum Einbringen von Stäuben in eine Metallschmelze einer pyrometallurgischen Anlage, bei dem ein Staubpartikel enthaltendes Trägergas durch eine Heizzone (6) eines elektrodenlosen Plasmabrenners (5) geleitet wird, in der es durch induktive Beheizung in ein Plasma überführt wird, bevor es anschließend in einen die Metallschmelze aufnehmenden Bereich einer Anlage eingeblasen wird.

2. Verfahren nach Anspruch 1, bei dem das Plasma derart beheizt wird, dass das Material der Staubpartikel in einen geschmolzenen oder dampfförmigen Zustand übergeht.

3. Verfahren nach Anspruch 1 oder 2, bei dem das Staubpartikel enthaltende Trägergas durch eine die Heizzone (6) bildende Lastspule (4) axial hindurch geleitet wird.

4. Verfahren nach Anspruch 3, bei dem der Heizzone über ein zentrales Injektionsrohr (7) ein mit Staubpartikeln beladenes Trägergas und über ein das Injektionsrohr (7) koaxial umfassendes Gasführungsrohr (8) ein von Staubpartikeln freies Gas zugeführt wird.

5. Verfahren nach einem der vorhergehenden Ansprüche, bei dem das Trägergas durch eine der Heizzone (6) vorgeschaltete, von einer Vorheizspule (13) schwächerer Leistung gebildete Vorheizzone (12) geleitet wird.

6. Verfahren nach einem der vorhergehenden Ansprüche, angewendet für die Stahlherstellung und Stahlverarbeitung. Patentansprüche 7 bis 15

7. Vorrichtung zum Einblasen von Stäuben in eine Metallschmelze einer pyrometallurgischen Anlage, umfassend einen elektrodenlosen Plasmabrenner (5), mit einem rohrförmigen, zum Hindurchleiten eines Staubpartikel enthaltenden Trägergases dienenden Gehäuse (1), das von einer eine Heizzone (6) bildenden induktiven Lastspule (4) koaxial umgriffen ist, **gekennzeichnet durch** eine der Heizzone (6) vorgeschaltete induktive Vorheizzone (12).

8. Vorrichtung nach einem der vorhergehenden Ansprüche, mit einem eingangsseitig zentral in das Gehäuse (1) hinein ragenden Injektionsrohr (7).

9. Vorrichtung nach Anspruch 8, bei der sich das Injektionsrohr (7) etwa bis zur Heizzone (6) erstreckt.

10. Vorrichtung nach Anspruch 8, bei der das Injektionsrohr (7) von einem Gasführungsrohr (8) koaxial umfasst ist, wobei zwischen Injektionsrohr (7) und Gasführungsrohr (8) bzw. Gehäuse (1) jeweils ein Ringkanal (9,10) vorhanden ist.

11. Vorrichtung nach Anspruch 10, in Verbindung mit Anspruch 8 oder 9, bei der die Vorheizzone von einer das Injektionsrohr (7) koaxial umfassenden Vorheizspule (13) gebildet wird.

12. Verwendung einer Vorrichtung, umfassend einen elektrodenlosen Plasmabrenner (5), mit einem rohrförmigen, zum Hindurchleiten eines Staubpartikel enthaltenden Trägergases dienenden Gehäuse (1), das von einer eine Heizzone (6) bildenden induktiven Lastspule (4) koaxial umgriffen ist zum Einblasen von Stäuben in eine Metallschmelze einer pyrometallurgischen Anlage.

13. Pyrometallurische Anlage mit einer Vorrichtung zum Einblasen von in eine Metallschmelze der Anlage einzubringenden Stäuben, umfassend einen elektrodenlosen Plasmabrenner (5), mit einem im Wesentlichen rohrförmigen, zum Hindurchleiten eines Staubpartikel enthaltenden Trägergases dienenden Gehäuse (1), das von einer eine Heizzone (6) bildenden induktiven Lastspule (4) koaxial umgriffen ist.

14. Anlage nach Anspruch 13, die eine der Heizzone (6) vorgeschaltete induktive Vorheizzone (12) aufweist.

15. Anlage nach Anspruch 13 und 14, bei der das Injektionsrohr von einem Gasführungsrohr (8) koaxial umfasst ist, wobei zwischen Injektionsrohr (7) und Gasführungsrohr (8) bzw. Gehäuse (1) jeweils ein Ringkanal (9, 10) vorhanden ist und bei der die Vorheizzone von einer das Injektionsrohr (7) koaxial umfassenden Vorheizspule (13) gebildet wird.

## Claims

1. Method for introducing dust into a metal melt of a pyrometallurgical installation, in which a carrier gas containing dust particles is routed through a heating zone (6) of an electrodeless plasma torch (5), in which it is converted into a plasma by inductive heating prior to then being blown into a region of an installation which receives the metal melt.

2. Method according to claim 1, in which the plasma is heated such that the material of the dust particles converts into a melted or vaporous state.

3. Method according to claim 1 or 2, in which the carrier gas containing the dust particles is routed axially through a load coil (4) forming the heating zone (6).

4. Method according to claim 3, in which the heating zone is supplied with a carrier gas loaded with dust particles by way of a central injection tube (7) and is supplied with a gas which is free of dust particles by way of a gas delivery tube (8) which coaxially surrounds the injection tube (7).

5. Method according to one of the preceding claims, in which the carrier gas is routed through a preheating zone (12) arranged upstream of the heating zone (6) and formed by a preheating coil (13) with weaker power.

6. Method according to one of the preceding claims, applied to steel making and steel processing. Claims 7 to 15

7. Device for blowing in dust into a metal melt of a pyrometallurgical installation, including an electrodeless plasma torch (5), with a tubular housing (1) which is used to allow the passage of a carrier gas containing dust particles, said housing being coaxially surrounded by an inductive load coil (4) forming a heating zone (6)
**characterised by** an inductive preheating zone (12) arranged upstream of the heating zone (6).

8. Device according to one of the preceding claims, with an injection tube (7) protruding centrally into the housing (1) on the inlet side.

9. Device according to claim 8, in which the injection tube (7) extends approximately to the heating zone (6).

10. Device according to claim 8, in which the injection tube (7) is coaxially surrounded by a gas delivery tube (8), with an annular channel (9, 10) being present between the injection tube (7) and the gas delivery tube (8) and/or housing (1) in each instance.

11. Device according to claim 10, in conjunction with claim 8 or 9, in which the preheating zone is formed by a preheating coil (13) coaxially surrounding the injection tube (7).

12. Use of a device, including an electrodeless plasma torch (5), with a tubular housing (1) which is used to allow the passage of a carrier gas containing dust particles, said housing being coaxially surrounded by an inductive load coil (4) forming a heating zone (6) in order to blow dust into a metal melt of a pyrometallurgical installation.

13. Pyrometallurgical installation comprising a device for blowing in dust which is to be introduced into a metal melt of the installation, including an electrodeless plasma torch (5), with an essentially tubular housing (1) which is used to allow the passage of a carrier gas containing dust particles, said housing being coaxially surrounded by an inductive load coil (4) forming a heating zone (6).

14. Installation according to claim 13, which has an inductive preheating zone (12) which is arranged upstream of the heating zone (6).

15. Installation according to claim 13 and 14, in which the injection tube is coaxially surrounded by a gas delivery tube (8), with an annular channel (9, 10) being present between the injection tube (7) and the gas delivery tube (8) and/or housing (1) in each instance and in which the preheating zone is formed by a preheating coil (13) coaxially surrounding the injection tube (7).

## Revendications

1. Procédé d'incorporation de poussières dans du métal fondu d'une installation pyrométallurgique, dans lequel on envoie un gaz porteur contenant des particules de poussière dans une zone ( 6 ) de chauffage d'un chalumeau ( 5 ) à plasma sans électrode, où il est transformé en un plasma par chauffage par induction, avant de l'insuffler ensuite dans une partie d'une installation recevant le métal fondu.

2. Procédé suivant la revendication 1, dans lequel on chauffe le plasma, de façon à ce que le matériau des particules de poussière passe à un état fondu ou sous forme de vapeur.

3. Procédé suivant la revendication 1 ou 2, dans lequel on envoie axialement le gaz porteur contenant des particules de poussière dans une bobine ( 4 ) de charge formant la zone ( 6 ) de chauffage.

4. Procédé suivant la revendication 3, dans lequel on envoie à la zone de chauffage, par un tube ( 7 ) central d'injection, un gaz porteur chargé de particules de poussière et, par un tube ( 8 ) de passage de gaz entourant coaxialement le tube ( 7 ) d'injection, un gaz exempt de particules de poussière.

5. Précédé suivant l'une des revendications précédentes, dans lequel on envoie le gaz porteur dans une zone ( 12 ) de chauffage préalable en amont de la zone ( 6 ) de chauffage et formée par une bobine ( 13 ) de chauffage préalable de puissance assez petite.

6. Procédé suivant l'une des revendications précédentes, utilisé pour la production de l'acier et le traitement de l'acier.

7. Dispositif d'insufflation de poussières dans du métal fondu d'une installation pyrométallurgique, comprenant un chalumeau ( 5 ) à plasma sans électrode, une enveloppe ( 1 ) sensiblement tubulaire servant au passage d'un gaz porteur contenant des particules de poussière et entourée coaxialement d'une bobine ( 4 ) de charge inductive formant une zone ( 6 ) de chauffage, **caractérisé par** une zone ( 12 ) de chauffage préalable par induction en amont de la zone ( 6 ) de chauffage.

8. Dispositif suivant l'une des revendications précédentes comprenant un tube ( 7 ) d'injection pénétrant du côté de l'entrée centralement dans l'enveloppe ( 1 ).

9. Dispositif suivant la revendication 8, dans lequel le tube ( 7 ) d'injection s'étend à peu près jusqu' à la zone ( 6 ) de chauffage.

10. Dispositif suivant la revendication 9, dans lequel le tube ( 7 ) d'injection est entouré coaxialement d'un tube ( 8 ) de passage de gaz, un canal ( 9, 10 ) annulaire étant présent respectivement entre le tube ( 7 ) d'injection et le tube ( 8 ) de passage de gaz ou l'enveloppe ( 1 ).

11. Dispositif suivant les revendications 10 en liaison avec la revendication 8 ou 9, dans lequel la zone ( 12 ) de chauffage préalable est formée par une bobine ( 13 ) de chauffage préalable entourant coaxialement le tube ( 7 ) d'injection.

12. Utilisation d'un dispositif comprenant un chalumeau ( 5 ) à plasma sans électrode ayant une enveloppe ( 1 ) tubulaire servant à l'amenée de gaz porteur contenant des particules de poussière, enveloppe qui est entourée coaxialement d'une bobine ( 4 ) de charge par induction formant une zone ( 6 ) de chauffage pour l'insufflation de poussières dans du métal fondu d'une installation pyrométallurgique.

13. Installation pyrométallurgique ayant un dispositif d'insufflation de poussières à introduire dans du métal fondu de l'installation, comprenant un chalumeau ( 5 ) à plasma sans électrode ayant une enveloppe sensiblement tibulaire servant à l'amenée du gaz porteur contenant des particules de poussière, enveloppe qui est entourée coaxialement d'une bobine ( 4 ) de charge par induction formant une zone ( 6 ) de chauffage.

14. Installation suivant la revendication 13, qui a une zone ( 12 ) de chauffage préalable par induction en amont de la zone ( 6 ) de chauffage.

15. Installation suivant les revendications 13 et 14, dans laquelle le tube d'injection est entouré coaxialement d'un tube ( 8 ) de passage de gaz, un canal ( 9, 10 ) annulaire étant présent respectivement entre le tube ( 7 ) d'injection et le tube ( 8 ) de passage de gaz ou l'enveloppe ( 1 ) et dans laquelle la zone de chauffage préalable est formée d'une bobine ( 13 ) de chauffage entourant coaxialement le tube ( 7 ) d'injection.
